# EUROPÄISCHE PATENTSCHRIFT

(11) **EP 3 284 812 B1**
(45) Veröffentlichungstag und Bekanntmachung des Hinweises auf die Patenterteilung: **21.08.2019**
(21) Anmeldenummer: 17201433.4
(22) Anmeldetag: 13.11.2017
(51) Int. Cl.: C12G 3/07, C12H 1/22

(54) **VERFAHREN ZUR BEHANDLUNG VON HOLZPARTIKELN FÜR DIE HERSTELLUNG VON ALKOHOLISCHEN GETRÄNKEN SOWIE IHRE VERWENDUNG UND EINE VORRICHTUNG FÜR IHRE VERWENDUNG**
METHOD FOR THE TREATMENT OF WOOD PARTICLES FOR THE PRODUCTION OF ALCOHOLIC BEVERAGES AND THEIR USE AND A DEVICE FOR ITS USE
PROCÉDÉ DE TRAITEMENT DE PARTICULES DE BOIS POUR PRODUCTION DE BOISSONS ALCOOLISÉES AINSI QUE LEUR UTILISATION ET DISPOSITIF DESTINÉ À LEUR UTILISATION

(43) Veröffentlichungstag der Anmeldung: 21.02.2018
(73) Patentinhaber: DDS Patente + Lizenzen AG, 6370 Stans (CH)
(72) Erfinder: Stockhausen, Dolf, 6370 Stans (CH)
(74) Vertreter: Proi World Intellectual Property GmbH

(56) Entgegenhaltungen:
- US-A1- 2008 028 942
- US-A1- 2010 092 636
- US-A1- 2011 129 589
- US-A1- 2012 164 300
- US-B1- 6 203 836

## Beschreibung

### Gebiet der Erfindung

Die Erfindung betrifft ein Verfahren zur Behandlung von Holzpartikeln für die Verwendung bei der Herstellung von alkoholischen Getränken. Ferner betrifft die Erfindung Holzpartikel, behandelt nach dem erfindungsgemäßen Verfahren für die Verwendung bei der Herstellung von alkoholischen Getränken, des Weiteren betrifft die Erfindung die Verwendung der erfindungsgemäßen Holzpartikel zur Behandlung von alkoholischen Getränken und schließlich betrifft die Erfindung auch eine Vorrichtung zur Verwendung der erfindungsgemäßen Holzpartikel zur Behandlung von alkoholischen Getränken.

### Hintergrund der Erfindung

Die Reifung alkoholischer Getränke in Fässern zum Zweck der Geschmacksmodifikation ist Jahrhunderte alt und wird universell praktiziert. Dabei diffundieren Geschmacksstoffe wie Vanilline und Holzzucker aus den Fasswandungen in die gelagerten Flüssigkeiten und es diffundieren umgekehrt unerwünschte Bestandteile der Flüssigkeiten, wie gewisse Alkoholmoleküle, in das Holz der Fässer.

Bei vielen Getränken wie, zum Beispiel, Wein ist die Fasslagerung oft nur von vergleichsweise kurzer Dauer, bei anderen Getränken, vor allem bei Malt Whisky, erstreckt sie sich über mehrere Jahre. Der Auswahl der Fässer wird der größte Einfluss auf die Geschmacksgestaltung des Whiskys zugeschrieben. Spitzenwhiskys weisen zumeist Lagerdauern von 8-16 oder sogar mehr Jahren auf. Aufgrund des in den gelagerten Destillaten gebundenen Kapitals, der Kosten der Fässer sowie des Verdunstungsverlusts, der bis zu 2% des Alkohols und mehr pro Jahr geht, entfällt der größte Teil der Herstellungskosten von, zum Beispiel, Malt Whiskys auf die Fassreifung.

Die folgenden Erörterungen beziehen sich beispielhaft auf Whisky, jedoch lassen sich die gewonnenen Erkenntnisse auch mit Erfolg auf andere alkoholische Getränke wie, zum Beispiel, Obstbrände, Rum, Cognac, Gin, Wein oder andere alkoholische Getränke übertragen.

Die Diffusionsvorgänge bei der Fassreifung folgen den Diffusionsgesetzen. In einem Anwendungsfall wie dem hier vorliegenden hängt (bei atmosphärischem Druck) die Intensität des Stoffaustauschs zwischen zwei Medien, hier, einem festen und einem flüssigen, an deren Kontaktoberfläche, vom Verhältnis der Kontaktoberfläche zum Flüssigkeitsvolumen, vom wechselseitigen Konzentrationsgefälle der diffundierenden Stoffe zwischen den Medien, von der Temperatur sowie von der Kontaktzeit ab.

Hieraus ergeben sich folgende Nachteile der Fassreifung von alkoholischen Getränken:
a) Aus der Geometrielehre ist bekannt, dass die Kugel die geometrische Figur mit dem kleinsten Verhältnis von Oberfläche zu Rauminhalt ist. Da das üblicherweise verwendete Holzfass in seiner geometrischen Charakteristik der Kugel nahekommt, ergibt sich, dass das Holzfass im Prinzip eher ungeeignet im Hinblick auf die Intensität der gewünschten Stoffdiffusionsvorgänge ist.
b) Es ist üblich, die Fassinnenseiten durch direktes Beflammen ohne und mit direkter Holzberührung zu "toasten", wovon man sich eine Karamellisierung der Holzzucker an der Oberfläche verspricht. Der Prozess ist schwer kontrollierbar. Ob dabei etwaige auftretende "Verkohlungen" der Aromadiffusion förderlich sind, ist umstritten. Sie erhöhen einerseits die Poren der Oberfläche, andererseits trägt die Asche kaum Aromen bei.
c) Bereits bei Raumtemperatur kommt es zu hohen Verdunstungsverlusten von Alkohol. Eine Temperaturerhöhung ist folglich bei der Fasslagerung nur sehr eingeschränkt einsetzbar.

Zur Kompensation der genannten Nachteile der Fasslagerung bleibt also nur der Zeitfaktor übrig, was die langen Lagerzeiten von Whiskys hoher Qualitätsstufe erklärt.

Neben der Verwendung von Holzfässern für alkoholische Getränke ist auch der Einsatz von Holzspänen bekannt. So werden, zum Beispiel, in bestimmten Weingebieten (zum Beispiel im Rioja, Spanien) getoastete und ungetoastete Eichenspäne vorzugsweise bei Rotweinen verwendet. Solche Holzspäne werden auch am Markt für die Spirituosenreifung angeboten. Jedoch ist kein Whisky, insbesondere, kein Spitzen-Malt Whisky, bekannt, der so hergestellt wird.

Bisherige Nachteile bei der Verwendung von Holzspänen für alkoholische Getränke, insbesondere für Whisky, sind, daß die vergrößerte Oberfläche der Holzspäne auch zu einer verstärkten Diffusion der im Holz enthaltenen Tannine in den Whisky führt, mit der Folge eines unangenehm bitteren Bei- und Nachgeschmacks. Dies kann insbesondere eintreten, wenn die Holzspäne aus, zum Beispiel, europäischem Eichenholz bestehen, das von Natur aus, im Vergleich zu amerikanischem Eichenholz, einen 10-fach höheren Tanningehalt aufweist.

Gelegentlich wird auch bemängelt, dass Holzspäne nicht zusätzliche Aromatisierungsschritte wie, zum Beispiel, die Einführung von Wein-, Rum-, Cognac- und Süßweinnoten durch Teillagerung in gebrauchten Fässern mit entsprechender Erstbefüllung erlauben.

Entsprechende Versuche mit Holzspäne aus den zerkleinerte Fassgauben derartiger Fässer scheiterten wiederum am hohen Tannineintrag, da ein idealtypisch quaderförmiger Holzspan nur an einer Seitenfläche getoastet und, zum Beispiel, mit Sherry etc. imprägniert sein kann, an den anderen 5 Seitenflächen jedoch die Eigenschaften ungetoasteten rohen Eichenholzes aufweist.

In GB621487 und in US2119234 wird zur Behandlung von Holz für die Verwendung von alkoholischen Getränken die Verwendung von chemischen Mitteln und Enzymen zur Behandlung vorgeschlagen, was jedoch nachteilig dazu führt, dass Fremdstoffe in die zu behandelnden alkoholischen Getränke gelangen können.

US9637712B2 und US9637713B2 stellen ein zeitlich und technisch eher aufwendiges Verfahren zur Herstellung von reifen destillierten Spirituosen vor unter Verwendung von Holz und aktinischem Licht, bei einer Temperatur von 60-77°Cund einer Behandlungsdauer von zweimal ca. 12 bzw 24 bis 336 Stunden.

US6203836B1 offenbart ein Verfahren zur Behandlung von Holz und dessen Verwendung zur Aromatisierung von verschiedenen wasserbasierten Flüssigkeiten. Bei diesem Verfahren werden Holzpartikel in einem Behältnis mit einer ethanolhaltigen Flüssigkeit bei eher willkürlichen Temperaturen gewaschen. US2012/164300 offenbart verschiedene Vorrichtungen zur Verwendung von Holz und alkoholischen Getränken, um eine beschleunigte Alterung von Weinen und anderen Spirituosen zu ermöglichen. Bei den Vorrichtungen gelangt Holz zunächst in eine Mühle, das dann zermahlene Holz gelangt anschließend in ein Behältnis, welches zusätzlich ein alkoholisches Getränk zur Inkubation enthält. Das Behältnis kann einen integrierten Filter enthalten, oder das alkoholische Getränk kann mittels eines Filters, der an einem Ablaufauslass angebracht ist, gefiltert werden.

Es ist somit Aufgabe der vorliegenden Erfindung, die im Stand der Technik genannten Nachteile zu vermeiden. Ferner ist es Aufgabe der vorliegenden Erfindung, ein einfaches und verbessertes Verfahren zur Behandlung von Holzpartikeln bereitzustellen, mit dem die Eigenschaften der Holzpartikel zur Verwendung für die Herstellung von alkoholischer Getränke optimiert werden. Des Weiteren liegt der vorliegenden Erfindung die Aufgabe zugrunde, diese optimierten Holzpartikel und deren Verwendung bereitzustellen. Diese Aufgaben werden durch die Lehren der unabhängigen Ansprüche gelöst. Weitergehende vorteilhafte Ausgestaltungen der Erfindungen sind Gegenstand der Unteransprüche.

### Begriffserklärungen

Im Folgenden werden einige Begriffe erläutert, die für die Beschreibung der Erfindung verwendet werden.

Mit dem Begriff "Holzpartikel" sind im Sinne der Erfindung, zum Beispiel,Holzchips, Holzschnitzel, Holzgranulat, Holzspäne oder vergleichbare durch Zerkleinerung hergestellte Holzpartikel jedweder Form und Größe gemeint. Mit dem Begriff "alkoholische Getränke" sind im Sinne der Erfindung jedwedige alkoholische Getränke gemeint, wie, zum Beispiel, Whisky, Obstbrände, Rum, Cognac, Gin, Sherry, Portwein, Wein etc. Mit dem Begriff "unter Agitation" sind im Sinne der Erfindung jedwedige Formen der Agitation (Bewegung) gemeint, wie, zum Beispiel, schütteln, wiegen, schleudern, drehen, wenden, rotieren etc. Mit dem Begriff "getoastete Holzpartikel" sind Holzpartikel gemeint, die im Sinne der Erfindung jedwediger Form eines Wärmeeinflusses ausgesetzt waren, der zu einer Aromatisierung beiträgt, wie, zum Beispiel, die Erwärmung der Holzpartikel in einem Backofen oder die Exponierung gegenüber andere Wärmequellen, wie, zum Beispiel, Feuer.

Mit dem Begriff "Entfernen des Wassers" sind im Sinne der Erfindung jedwedige Formen des Entfernen von Wassers gemeint, wie, zum Beispiel, dasAbschleudern, das Absieben, das Abseien, das Abgießen, das Abschütteln etc.

Mit dem Begriff "thermische Trocknung der Holzpartikel" sind im Sinne der Erfindung jedwedige Formen des thermischen Trocknens gemeint, wie, zum Beispiel, mittels Backofen oder mittels einer anderen thermischen Quelle.

Mit dem Begriff "Toasten der Holzpartikel" sind im Sinne der Erfindung jedwedige Formen des Wärmeeinflusses auf Holzpartikel gemeint, die zur einer Aromatisierung beitragen, wie, zum Beispiel, die Erwärmung der Holzpartikel in einem Backofen, oder die Exponierung gegenüber andere Wärmequellen, wie, zum Beispiel, Feuer.

Mit dem Begriff "Inkubation der erfindungsgemäßen Holzpartikel mit einer aromagebenden Flüssigkeit" sind im Sinne der Erfindung jedwedige Formen der Inkubation der erfindungsgemäßen Holzpartikel mit einer Flüssigkeit für eine beliebige Inkubationszeit gemeint, wie, zum Beispiel, durch Überschichten der erfindungsgemäßen Holzpartikel mit der aromagebenden Flüssigkeit oder auch andere Formen des Kontaktes zwischen Holzpartikel und Flüssigkeit.

Mit dem Begriff "Inkubationen des alkoholischen Getränks mit den erfindungsgemäßen
Holzpartikeln" sind im Sinne der Erfindung jedwedige Form und Dauer der Inkubation gemeint.

Mit dem Begriff "Backofen" sind im Sinne der Erfindung jedwedige Arten von Öfen gemeint, die einen Backvorgang ermöglichen.

Mit dem Begriff "aromagebenden Flüssigkeit" sind im Sinne der Erfindung jedwedige Flüssigkeiten gemeint, die in irgendweiner Art und Weise einen aromagebenden Beitrag leisten, wie, zum Beispiel insbesondere, Sherry, Portwein, Rum, Cognac, Gin, Wein, Obstbrände oder auch andere.

Mit dem Begriff "Entfernen etwaiger überstehender aromagebender Flüssigkeit" sind im Sinne der Erfindung jedwedige Formen des Entfernes einer Flüssigkeit gemeint, wie, zum Beispiel, das Absieben, das Abschleudern.

Mit dem Begriff "Trocknen" sind im Sinne der Erfindung jedwedige Formen des Trocknens gemeint, wie, zum Beispiel, in einem Ofen.

Mit dem Begriff "kleinteilige Holzpartikel" sind im Sinne der Erfindung verschiedene Größen von Holzpartikel gemeint, die für einen Fachman als kleinteilig gelten, bevorzugt haben kleinteilige Holzpartikel eine Kantenlänge von ca. 2mm.

Mit dem Begriff "Rühreinheit" sind im Sinne der Erfindung jedwedige Arten von mit Rührwerken versehenen Behältern gemeint.

Mit dem Begriff "Siebeinheit" sind im Sinne der Erfindung jedwedige Arten von Siebvorrichtungen gemeint, wie, zum Beispiel, ein Korbgeflecht, ein Sieb oder jedes anderere Gerät, das im Ganzen oder zum Teil, insbesondere am Boden, aus einem durchlöcherten Material oder aus einem netz-oder gitterartigen Geflecht besteht und das dazu dient, Festes aus einer Flüssigkeit auszusondern oder kleinere Substanzen von den größeren zu trennen.

### Zusammenfassung der Erfindung

Überraschenderweise wurde gefunden, dass sich die genannten Nachteile aus dem Stand der Technik mit dem erfindungsgemäßen Verfahren zur Behandlung von Holzpartikel für die Herstellung von alkoholischen Getränken, sowie mit den erfindungsgemäßen Holzpartikeln, mit der erfindungsgemäßen Verwendung der erfindungsgemäßen Holzpartikelnund mit einer erfindungsgemäßen Vorrichtung zur Verwendung der erfindungsgemäßen Holzpartikel überwinden lassen.

Ferner ist es überraschenderweise gelungen ein einfaches und verbessertes Verfahren zur Behandlung von Holzpartikelnzu etablieren, mit dem die Eigenschaften der Holzpartikel zur Verwendung für die Herstellung von alkoholischer Getränke optimiert werden können. Die Verwendung dieser erfindungsgemäßen Holzpartikel für die Herstellung von alkoholischen Getränken sowie die Bereitstellung einer Vorrichtung für die Verwendung dieser erfindungsgemäßen Holzpartikel ermöglichen zudem eine optimierte Herstellung von alkoholischen Getränken.

Es gibt eine Vielzahl von Möglichkeiten das erfindungsgemäße Verfahren, die erfindungsgemäßen Holzpartikel, die Verwendung der erfindungsgemäßen Holzpartikel, sowie die erfindungsgemäße Vorrichtung zur Verwendung der erfindungsgemäßen Holzpartikel auszugestalten und weiterzubilden. Hierzu sei einerseits verwiesen auf die den unabhängigen Patentansprüchen nachgeordneten Patentansprüche, andererseits auf die Beschreibung in den Ausführungsbeispielen.

Obwohl die Erfindung in Verbindung mit Ausführungsbeispielen beschrieben wird, soll dennoch verstanden werden, dass die vorliegende Beschreibung die Erfindung in keinster Weise auf diese angegebenen Ausführungsbeispiel einschränken soll. Vielmehr soll die Erfindung nicht nur die Ausführungsbeispiele, sondern auch verschiedene Alternativen, Modifikationen, Äquivalente und weitere Ausführungsbeispiele abdecken, die im Geiste und Umfang der Erfindung, wie sie durch die beigefügten Ansprüche definiert ist, enthalten sein können.

Die Aufgabe der vorliegenden Erfindung wird gemäß einer ersten Lehre mit einem erfindungsgemäßen Verfahren zur Behandlung von Holzpartikeln für die Verwendung bei der Herstellung von alkoholischen Getränken gelöst, das folgende Schritte umfasst:
(a) das Waschen der Holzpartikel mit Wasser unter Agitation bei mindestens 60°C, wobei die Holzpartikel optional bereits getoastet sein können;
(b) das Entfernen des Wassers von den Holzpartikeln;
(c) das thermische Trocknen der Holzpartikel;
(d) das Toasten der Holzpartikel zum Erhalt von erfindungsgemäßen Holzpartikeln;
(e) optional die Inkubation der erfindungsgemäßen Holzpartikel mit einer aromagebenden Flüssigkeit, gefolgt vom anschließenden Entfernen etwaiger überstehender aromagebenden Flüssigkeit und optional dem anschließenden Trocknen der erfindungsgemäßen Holzpartikeln zum Erhalt von aromatisierten erfindungsgemäßen Holzpartikeln.

Gemäß einer Ausgestaltung des erfindungsgemäßen Verfahrens sind die Holzpartikel kleinteilig, bevorzugt mit einer Kantenlänge von ca. 2mm, zudem können die Holzpartikel vorzugsweise jedwedige Form haben, bevorzugt die Form von Holzchips oder Holzkubes.

Vorzugsweise sind die Holzpartikel aus jedweder Art von Holz, bevorzugt aus Eichenholz, besonders bevorzugt aus amerikanischem Eichenholz.

Gemäß einer weiteren Ausgestaltung des erfindungsgemäßen Verfahrens erfolgt das Waschen der Holzpartikel mit Wasser unter Agitation bei mindestens 60°C, bevorzugt bei mindestens 80°C, besonders bevorzugt bei mindestens 95°C.

Vorzugsweise erfolgt das Waschen der Holzpartikel mit Wasser unter Agitation für mehr als 1 h, bevorzugt für mehr als 5h, besonders bevorzugt für mehr als 8h.

Gemäß einer anderen Ausgestaltung des erfindungsgemäßen Verfahrens soll für das Waschen der Holzpartikel mit Wasser unter Agitationmehr als 5 Liter Wasser je kg Holzpartikel verwendet werden, bevorzugt mehr als 10 Liter Wasser je kg Holzpartikel und besonders bevorzugt mehr als 12 Liter Wasser je kg Holzpartikel.

Vorzugsweise kann das Entfernen des Wassers von den Holzpartikeln mittels verschiedener Methoden erfolgen, bevorzugt durch Sieben oder Nutschen, besonders bevorzugt durch Schleudern.

Gemäß einer Ausgestaltung des erfindungsgemäßen Verfahrens kann das thermische Trocknen der Holzpartikel mittels verschiedener Methoden erfolgen, bevorzugt in einem Backofen, besonders bevorzugt in einem Backofen für ca. 15-30 Minuten bei ca. 180-200°C; vorzugsweise erfolgt das Toasten der Holzpartikel mittels verschiedener Methoden, bevorzugt in einem Backofen, besonders bevorzugt in einem Backofen für ca. 60 Minuten bei ca. 180-200°C.

Vorzugsweise kann die optionale Inkubation der erfindungsgemäßen Holzpartikel mit einer aromagebenden Flüssigkeit nach verschiedenen Methoden erfolgen, bevorzugt durch Überschichten der erfindungsgemäßen Holzpartikel mit der aromagebenden Flüssigkeit; vorzugsweise kann die aromagebende Flüssigkeit Sherry, Portwein, Rum, Cognac, Gin, Wein, ein beliebiger Obstbrand oder eine andere Flüssigkeit mit erwünschtem Geschmacksbeitrag sein.

Gemäß einer weiteren Ausgestaltung des erfindungsgemäßen Verfahrens können die optional inkubierten Holzpartikel mit aromagebender Flüssigkeit anschließend optional mittels verschiedener Methoden getrocknet werden, bevorzugt durch Absieben von überschüssiger aromagebender Flüssigkeit oder thermisch in einem Backofen bei 90-130°C, bevorzugt bei 120°C.

Ferner wird die Aufgabe der vorliegenden Erfindung gemäß einer zweiten Lehregelöst, mit der Holzpartikel,welche nach dem erfindungsgemäßen Verfahren behandelt worden sind, zur Herstellung von alkoholischen Getränken verwendet werden, wobei die erfindungsgemäßen Holzpartikel optional aromatisiert sein können und wobei die Holzpartikel einmalig oder mehrfach zur Behandlung von alkoholischen Getränken verwendet werden können.

Die Aufgabe der vorliegenden Erfindung wird zudem gemäß einer dritten Lehre gelöst, bei der die Verwendung der erfindungsgemäßen Holzpartikel zur Herstellung von alkoholischen Getränken folgende Schritte umfasst:
(a) das Versehen eines alkoholischen Getränks mit erfindungsgemäßen Holzpartikeln, die optional aromatisiert sein können, wobei die Holzpartikel neu hergestellt oder bereits zur Getränkebehandlung verwendet worden sein können, und wobei optional das alkoholische Getränk bereits in einem Fass gelagert gewesen sein kann;
(b) die Inkubation des alkoholischen Getränks mit den erfindungsgemäßen Holzpartikeln;
(c) das Entfernen der erfindungsgemäßen Holzpartikel aus dem damit inkubierten alkoholischen Getränk;
(d) optional die weitere Lagerung des inkubierten alkoholischen Getränks in einem Fass, bevorzugt in einem Eichenfass, besonders bevorzugt in einem Fass aus amerikanischer Eiche;
(e) alternativ optional eine oder mehrere weitere Inkubationen des alkoholischen Getränks mit erfindungsgemäßen Holzpartikeln, wobei die erfindungsgemäßen Holzpartikel optional aromatisiert sein können und wobei die Holzpartikel neu hergestellt oder bereits zur Getränkebehandlung verwendet worden sein können.

Gemäß einer Ausgestaltung der erfindungsgemäßen Verwendung der erfindungsgemäßen Holzpartikel wird das alkoholische Getränk mit mindestens 10g je Liter erfindungsgemäßen Holzpartikeln versehen, bevorzugt mit 10g bis 70g je Liter erfindungsgemäßen Holzpartikel.

Vorzugsweise kann bei der Verwendung der erfindungsgemäßen Holzpartikel die Inkubation des alkoholischen Getränks mit den erfindungsgemäßen Holzpartikeln unter Agitation ca. 3 Stunden bis 3 Monate oder länger dauern, bevorzugt ca. 4 bis 24 Stunden, besonders bevorzugt ca. 6 bis 14 Stunden.

Die Aufgabe der vorliegenden Erfindung wird fernergemäß einer vierten Lehre gelöst, mit der eine Vorrichtung zur Verwendung der erfindungsgemäßen Holzpartikel zur Herstellung von alkoholischen Getränken bereitgestellt wird, die folgende Bestandteile umfasst:
a) eine Rühreinheit zur Aufnahme eines alkoholischen Getränks;
b) eine Siebeinheit zur Aufnahme von erfindungsgemäßen Holzpartikeln;
wobei die Rühreinheit bevorzugt einen Ankerrührer aufweist und/oder
wobei die Siebeinheit bevorzugt ein Drahtgeflecht aufweist; und/oder
wobei die Vorrichtung mehrere hundert Liter alkoholischen Getränks zur Behandlung mit erfindungsgemäßen Holzpartikel aufnehmen kann, und/oder
wobei die erfindungsgemäßen Holzpartikel optional aromatisiert sein können.

### Vorteile der Erfindung

Es wurde überraschenderweise und vorteilhaft gefunden, dass mit dem erfindungsgemäßen Verfahren zur Behandlung von Holzpartikel für die Herstellung von alkoholischen Getränken sich schnell, einfach, zuverlässig, technisch leicht realisierbar, leicht skalierbar und kostengünstig Holzpartikel herstellen lassen, die für die Herstellung von unterschiedlichen alkoholischen Getränken optimiert sind und sich somit vielseitig einsetzen lassen. Zudem wird mit dem erfindungsgemäßen Verfahren vorteilhaft sichergestellt, dass keine (unerwünschten) Fremdstoffe, wie, zum Beispiel, Enzyme oder andere Hilfsmittel in die zu behandelnden alkoholischen Getränke eingetragen werden. Wie die Ausführungsbeispiele zeigen, sind die erfindungsgemäßen Holzpartikel bestmöglichst geeignet für die Herstellung und Veredelung von verschiedenen alkoholischen Getränken, so, zum Beispiel auch, für die Herstellung und Veredelung von Whiskys.

Das erfindungsgemäße Verfahren ist technisch leicht skalierbar, solange die Grundprinzipien von ausreichenden Menge an Wasser, Kochtemperatur, Agitation und anschließende Toastung der Holzpartikel eingehalten werden, wobei das Waschen der Holzpartikel mit Wasser unter Agitation bei mindestens 60°C, bevorzugt bei mindestens 80°C, besonders bevorzugt bei mindestens 95°C erfolgen soll, wobei vorzugsweise das Waschen der Holzpartikel mit Wasser unter Agitation für mehr als 1h, bevorzugt für mehr als 5h, besonders bevorzugt für mehr als 8h erfolgen soll, wobei das Waschen der Holzpartikel mit Wasser unter Agitationvorzugsweise bei mehr als 5 Liter Wasser je kg Holzpartikel erfolgen soll, bevorzugt bei mehr als 10 Liter Wasser je kg Holzpartikel, besonders bevorzugt bei mehr als 12 Liter Wasser je kg Holzpartikel.

Es ist anzunehmen, dass sich durch die Anwendung von Temperaturen oberhalb des atmosphärischen Kochpunkts unter Druck, etwa in Extraktionsapparaturen, wie sie in der chemischen Industrie eingesetzt werden, weitere Effizienzsteigerungen erzielen lassen. Des Weiteren sind Extraktionen mit nicht-wässrigen Lösemitteln, etwa analog der Kaffee-Decoffeinierung, denkbar. Es muss dabei aber sichergestellt werden, dass - etwa im Zuge der Toastung - selbst kleinste Spuren des Lösemittels vollständig aus den Holzpartikel entfernt werden.

Es lassen sich mit den erfindungsgemäßen Holzpartikeln überraschenderweise und vorteilhaft, zum Beispiel, sogar qualitativ hochwertige Produkte wie Single Malt Whiskys, Blended Whiskys etc. einfach, zuverlässig, schnell (zum Beispiel, in wenigen Tagen), qualitativ hochwertig,kostengünstig, mit variabler Aromavielfalt, ohne großen technischen Aufwand und einfach skalierbar, daher auch in einem industriellen Verfahren, herstellen. Des weiteren lassen sich überraschenderweise und vorteilhaft auch andere alkoholische Getränke, wie, zum Beispiel, Wein oder Zwetschgenwasser einfach, zuverlässig, schnell (zum Beispiel, in wenigen Tagen), qualitativ hochwertig,kostengünstig, mit variabler Aromavielfalt, ohne großen technischen Aufwand und einfach skalierbar, herstellen.

Zudem lassen sich die erfindungsgemäßen Holzpartikel für die Herstellung von alkoholischen Getränken überraschenderweise und vorteilhaft ein- und mehrfach verwenden und sie sind überraschenderweise und vorteilhaft leicht inkubierbar mit einer aromagebenden Flüssigkeit für die leichte und vielfältige Aromatisierung von alkoholischen Getränken, wie, zum Beispiel, von Whiskys.

Des weiteren lassen sich mit den erfindungsgemäßen Holzpartikeln (weltweit) mehr und kostengünstigere qualitativ hochwertige Produkte wie, zum Beispiel, Single Malt Whiskys, Blended Whiskys etc. herstellen, weswegen dann auch mehr und kostengünstigere qualitativ hochwertige Produkte auf den Markt kommen können und mehr Konsumenten in den Genuß von diesen qualitativ hochwertigen Produkten kommen können.

Die erfindungsgemäßen Holzpartikel, die nach dem erfindungsgemäßen Verfahren behandelt werden, haben weitere Vorteile. Sie sind charakterisiert durch eine hohe Oberfläche mit hoher Beladung an erwünschten Aromastoffen wie Karamell- und Vanillesubstanzen sowie einen sehr geringen Gehalt an Tannin und anderen unerwünschten Geschmacksstoffen. Zusätzlich können diese erfindungsgemäßen Holzpartikel Träger zahlreicher zusätzlicher Aromanoten wie, zum Beispiel, von Sherry, von Portwein oder von anderen Getränken mit charakteristischem, mit, zum Beispiel, Whisky harmonisierendem Geschmack sein, der nicht von störenden Geschmacksstoffen begleitet wird.

Bei der Extraktion von Tanninen und anderen Geschmacksstoffen des Holzes spielen die Agitation der Holzpartikel sowie das Wasser möglichst in der Nähe der Kochtemperatur von mindestens 60°C, bevorzugt bei 80°C und besonders bevorzugt bei 95°C eine entscheidende Rolle. Verfahrensversuche mit Wasser bei Kochtemperatur ohne Agitation der Holzpartikel ergaben unbefriedigende Extraktionsergebnisse der Holzpartikel, mit der Folge, dass anschließend behandelte alkoholische Getränke einen störenden Bittergeschmack aufwiesen (siehe die Vergleichsbeispiele 1a und 3a).

Die Holzpartikel bestehen vorzugsweise aus Eichenholz, und zwar wiederum vorzugsweise aus Holz der tanninärmeren amerikanischen Eiche, weil sich diese naturgemäß für einen Prozess, bei dessen Ergebnis es auf einen möglichst geringen Endgehalt an eluierbarem Tannin ankommt, besser eignen als solche aus tanninreicherer europäischer Eiche. Selbst dann, wenn nicht auszuschließen ist, dass sich aus europäischen Eichenholzpartikel mit Hilfe intensiverer wässriger Extraktion, etwa durch weitere Waschgänge oder durch Extraktion bei Temperaturen oberhalb der atmosphärischen Kochtemperatur unter Druck, zur Reifung geeignete Holzpartikel herstellen lassen, bleibt amerikanische Eiche aus prozessökonomischen Gründen bevorzugt und wurde deshalb den Beispielen zugrunde gelegt, was aber in keiner Weise den Schutzbereich der vorliegenden Erfindung einschränken soll.

Die erfindungsgemäße Verwendung der erfindungsgemäßen Holzpartikel kann auch in Kombination mit einer Fasslagerung eines alkoholischen Getränks vorher oder nachher kombiniert werden, um besondere zusätzliche Geschmacks- oder Farbeffekte für das alkoholische Getränk zu erzielen. Auch hierbei bleiben die Vorteile des erfindungsgemäßen Verfahrens erhalten. Denn in der Regel reichen einige wenige Wochen Fasslagerung für das alkoholische Getränk aus, um einen Zusatzeffekt zur Behandlung mit den erfindungsgemäßen Holzpartikel zu erlangen.

Denkbar wäre auch zunächst eine Fasslagerung von Whisky von drei Jahren und einem Tag durchzuführen, gefolgt von einer Behandlung mit den erfindungsgemäßen Holzpartikeln, um den noch unreifen Whisky auf einen ähnlichen Reifezustand zu bringen, der dem von zehn und mehr Jahren Fasslagerung entspricht. Zusätzlich wäre dann die gesetzliche Bezeichnung "Whisky" zulässig.

Zudem wurdeüberraschenderweise und vorteilhaft gefunden, dass mit der erfindungsgemäßen Vorrichtung zur Verwendung der erfindungsgemäßen Holzpartikel sich einfach, zuverlässig, schnell (zum Beispiel, in wenigen Tagen), qualitativ hochwertig, kostengünstig, mit variabler Aromavielfalt, ohne großen technischen Aufwand und einfach skalierbar, eine Vielzahl von alkoholischen Getränken herstellen lassen, die, zum Beispiel, alkoholischen Getränken ähneln können, die mehrere Monate Fass gelagert wurden, wie, zum Beispiel, Whiskys.

So lassen sich überraschenderweise und vorteilhaft mit der erfindungsgemäßen Vorrichtung zur Verwendung der erfindungsgemäßen Holzpartikel auch qualitativ hochwertige Produkte, wie, zum Beispiel, Single Malt Whiskys, Blended Whiskys etc. einfach, zuverlässig, schnell (zum Beispiel, in wenigen Tagen), qualitativ hochwertig, kostengünstig, mit variabler Aromavielfalt, ohne großen technischen Aufwand und einfach skalierbar, herstellen, die Whiskys ähneln können, die mehrere Monate Fass gelagert wurden oder die sogar Whiskys aus langjähriger Fassreifung ähneln können.

Die geschilderten Lehren, Erkenntnisse, Verfahren und Verwendungen lassen sich nicht nur auf Whisky, sondern auch auf andere alkoholische Getränke, wie, zum Beispiel, Obstbrände, Rum, Cognac, Gin, Wein etc. übertragen und sollen in keinster Weise den Umfang der vorliegenden Erfindung einschränken.

Im Folgenden wird die Erfindung anhand bevorzugter Ausführungsbeispiele näher beschrieben, welche lediglich zu Veranschaulichungszwecken angegeben sind und in keiner Weise den Schutzbereich der vorliegenden Erfindung einschränken sollen.

### Beispiel 1: Herstellung von erfindungsgemäßen Holzpartikeln

1kg eines getoasteten Eichenchipgranulats (Holzpartikel AO DR der Firma Eder, Bad Dürkheim/D, aus amerikanischer Eiche, stark getoastet) wird in einem Wäschesack aus Polyamidgewebe eingeschlossen, 3x3 Stunden in einer marktüblichen Haushaltswaschmaschine bei 95°C nur mit Wasser ohne Zusatz von Wasch- und sonstigen Hilfsmitteln gewaschen und abgeschleudert. Das schleuderfeuchte Granulat wird dem Wäschesack entnommen und in etwa 1cm dicker Schicht gleichmäßig auf mehreren mit kleinen Löcher ausgestatteten Backblechen ausgebreitet. Zunächst wird 20 Minuten bei 195°C getrocknet. Daran schließt sich im selben Backofen die Toastung an. Hier haben sich 45-60 Minuten bei 180-200 Grad C als ausreichend und geschmacksoptimal erwiesen. Es resultieren erfindungsgemäße Holzpartikel.

### Vergleichsbeispiel 1 a: Extraktion ohne Agitation

1kg des in Beispiel 1 verwendeten Eichenchipgranulats (Holzpartikel AO DR der Firma Eder, Bad Dürkheim/D, aus amerikanischer Eiche, stark getoastet) werden in einem Kochtopf 3x3 Stunden mit jeweils 5 Liter frischem Wasser ohne Zusatz von Wasch- und sonstigen Hilfsmitteln und ohne Agitation abgekocht, anschließend abgesiebt. Trocknung und Toastung erfolgen wie in Beispiel 1.

### Beispiel 2: Herstellung von aromatisierten erfindungsgemäßen Holzpartikeln mit Portweinnote

500 Gramm des behandelten, getrockneten und getoasteten Granulats aus Beispiel 1 werden in ein Einmachglas gefüllt und mit 500ml handelsüblichem Portwein übergossen, so dass das gesamte Granulat damit benetzt wird. Das Gemenge wird im verschlossenen Glas 2 Monate gelagert. Dann wird das Granulat durch Sieben vom überschüssigen Portwein befreit und auf einem gelochten Backblech im Backofen 30 Minuten bei 120°C getrocknet. Es resultieren aromatisierte erfindungsgemäße Holzpartikel mit Portweinnote.

### Beispiel 3: Single Malt Whisky mit erfindungsgemäßen Holzpartikeln

400ml eines ungereiften Whiskydestillats mit 63 Vol.-% Alkohol (Basis: Buchenrauch-Gerstenmalz der Fa. Weyermann, Bamberg/D) werden in eine Glasflasche gefüllt und mit 12 Gramm (30 Gramm/Liter) erfindungsgemäßen Holzpartikeln versehen. Die Flasche wird liegend gelagert und gelegentlich bewegt, um ausreichenden Kontakt zwischen Destillat und Holzpartikel zu gewährleisten. Nach 18 Stunden hat das Destillat selbst bei 63 Vol.-% Alkohol seine Schärfe verloren und einen angenehm fruchtigen Geschmack mit leicht rauchigem Abgang angenommen. Der Nachgeschmack nach Tannin ist eher gering und liegt weit unterhalb dessen von marktüblichen zum Vergleich herangezogenen Single Malt Whiskys mit hoher Bewertung.

### Vergleichsbeispiel 3a: Single Malt Whisky mit Holzpartikeln, hergestellt ohne Agitation

Der Versuch gemäß Beispiel 3 wird mit dem Holzpartikeln aus dem Vergleichsbeispiel 1a wiederholt. Nach 18 Stunden resultiert ein Getränk ähnlich dem aus Beispiel 3, jedoch ist der durch Tannine bedingte Bittergeschmack wesentlich ausgeprägter.

### Beispiel 4: Single Malt Whisky mit erfindungsgemäßen Holzpartikeln

Der Versuch wird wie in Beispiel 3 geführt, jedoch werden dem Destillat 16 Gramm (40 Gramm/Liter) erfindungsgemäße Holzpartikel zugesetzt. Das in Beispiel 3 beschriebene Ergebnis tritt bereits nach 12 Stunden ein.

Beispiel 5: Single Malt Whisky mit aromatisierten erfindungsgemäßen Holzpartikeln Die Versuchsanordnung ist wie in Beispiel 4, jedoch gelangen 16 Gramm (40 Gramm/Liter) aromatisierte erfindungsgemäße Holzpartikeln zum Einsatz. Das Ergebnis ist ein milder, fruchtiger Whisky mit Portweinnote.

### Beispiel 5a: Single Malt Whisky aus mehrfacher Behandlung mit erfindungsgemäßen Holzpartikeln

Die Versuchsanordnung ist wie in Beispiel 5, jedoch wird mit den aromatisierten erfindungsgemäßen Holzpartikeln nicht unbehandeltes Destillat, sondern das bereits mit (nicht aromatisierten) erfindungsgemäßen Holzpartikeln behandelte Destillat aus Beispiel 4 behandelt. Das Ergebnis ist ein sehr reifer, sehr milder, sehr fruchtiger Whisky mit Portweinnote.

### Beispiel 6: Single Malt Whisky mit erfindungsgemäßen Holzpartikeln mit verlängerter Behandlungsdauer

Die Versuchsanordnung ist wie in Beispiel 3, jedoch wird die Behandlungsdauer auf 3 Monate ausgedehnt. Es resultiert ein Whisky mit kräftigem Geschmack und markanter Holznote ähnlich der eines schottischen Single Malt Whiskys mit sehr langer Fasslagerung (z. B. von 21 Jahren).

### Beispiel 7: Single Malt Whisky aus kurzzeitig fassgelagertem Destillat mit erfindungsgemäßen Holzpartikeln

400ml eines Destillats mit 50 Vol.-% Alkohol auf der Basis mehrerer Gerstenmalze, das bereits 4 Wochen in einem gebrauchten Bourbonfass der Firma Eder, Bad Dürkheim/D, gelegen hat, werden in einer Flasche mit 8 Gramm (20 Gramm/Liter) erfindungsgemäßen Holzpartikeln versehen. Bereits nach 6 Stunden resultiert ein milder, großer, fruchtiger Whisky mit langanhaltendem rauchigen Abgang, der, zum Beispiel, bei einer Blindverkostung mit verschiedenen schottischen Spitzenwhiskys als "sehr gut" abschneidet.

### Beispiel 8: Single Malt Whisky aus einjährig fassgelagertem New Spirit mit erfindungsgemäßen Holzpartikeln

400ml des "Hot Stone new make, Sherry matured", mit 50,7 Vol.-% Alkohol, der Fa. Destillerie Weutz GmbH, St. Nikolai i. S., Steiermark/Österreich, 1 Jahr im europäischen Sherryfass gereift, werden in einer Flasche mit 8 Gramm (20 Gramm/Liter) erfindungsgemäßen Holzpartikeln versehen. Bereits nach 6 Stunden resultiert ein milder, voluminöser, fruchtiger Whisky mit langanhaltendem Abgang, dessen Tanninnote allerdings aufgrund der einjährigen Lagerung in tanninreichen europäischen Eichenfässern zum Teil erhalten geblieben ist.

### Beispiel 9: Single Malt Whisky aus Frischdestillat mit erfindungsgemäßen aromatisierten Holzpartikeln

200ml "Young Deer" New Spirit Classic 64% der Fa. Langatun Distillery AG, Aarwangen/Bern/Schweiz werden in einer Flasche mit 8 Gramm (40 Gramm/Liter) erfindungsgemäßen aromatisierten Holzpartikeln versehen. Bereits nach 8 Stunden resultiert ein milder, sehr fruchtiger Whisky.

### Beispiel 10: Single Malt Whisky aus Frischdestillat mit verlängerter Behandlungsdauer und mit erfindungsgemäßen aromatisierten Holzpartikeln

200ml "Young Deer" New Spirit Classic 64% der Fa. Langatun Distillery AG, Aarwangen/Bern/Schweiz, werden in einer Flasche mit 6 Gramm (30 Gramm/Liter) erfindungsgemäßen aromatisierten Holzpartikeln versehen. Nach einer Woche resultiert einmilder, fruchtiger Whisky mit Portweinnote und kräftiger Holznote, jedoch ohne störenden Bittergeschmack im Abgang.

### Beispiel 11: Geschmacksverbesserung eines 6-jährigen Single Malt Whiskys

200ml eines 40%igen am Markt erhältlichen, 6 Jahre in Bourbon- und Chardonnay-Fässern gelagerten Single Malt Whiskys werden in einer Flasche mit 4 Gramm (20 Gramm/Liter) erfindungsgemäßen aromatisierten Holzpartikeln versehen. Bereits nach 6 Stunden ist der Whisky fruchtiger und erheblich milder geworden. Seine ursprünglich starke Tanninnote ist nun weniger markant.

### Beispiel 12: Blended New Spirit

100ml des in den Beispielen 1-5 verwendeten Destillats mit 63 Vol.-% Alkohol und (ermangels Verfügbarkeit von reinen 96%igen Trinkalkohols in der Schweiz) 150ml Wodka mit 40 Vol.-% werden mit 10 Gramm (40 Gramm/Liter) aromatisierten erfindungsgemäßen Holzpartikeln versehen. Nach bereits 10 Stunden ergibt sich ein angenehm aromatisierter, milder Blended Whisky im oberen marktüblichen Qualitätssegment.

### Beispiel 13: Verbesserung von minderwertigem Zwetschgenwasser

200ml eines Zwetschgenwassers (Häfelibrand) minderer Qualität mit 40 Vol.-% Alkohol werden 12 Stunden mit 4 Gramm (20 Gramm/Liter) erfindungsgemäßen Holzpartikeln versetzt und gelagert. Im Ergebnis verliert das Zwetschgenwasser den größten Teil seiner Schärfe und weist ein deutlich volleres und runderes Aroma auf als das Ausgangsmaterial.

### Beispiel 14: Ersatz von Eichenfass-Lagerung bei Wein

200ml eines im Stahltank ausgebauten Weißburgunder-Weißweins (2016er Weißburgunder Tradition des Weinguts Stefan Potzinger, Gabersdorf/Steiermark/Österreich) mit 12,5 Vol.-% Alkohol werden mit 4 Gramm (20 Gramm/Liter) erfindungsgemäßen Holzpartikeln versetzt. Nach 12 Stunden resultiert ein Wein mit dezenter Holznote bei reduzierter Fruchtigkeit ähnlich Weinen, die mehrere Monate im 2000-Liter-Eichenfass gelagert wurden.

### Beispiel 15: Rührwerksapparat zur Verwendung von erfindungsgemäßen Holzpartikeln

Für die Verwendung der erfindungsgemäßen Holzpartikel im technischen Maßstab wird ein stehender 500 Liter-Apparat aus Edelstahl mit verschliessbarem Deckel und langsam laufendem Ankerrührer oder einem anderen Rührwerk benötigt. Spezielle mobile Einbauten in Gestalt von Körben aus Edelstahldrahtgeflecht oder andere Siebeinheiten, die zum Beispiel an Haken, an Rührerwelle und Rührerarmen befestigt werden, sollen die erfindungsgemäßen Holzpartikel aufnehmen und mittels Rührer langsam durch die zu behandelnde Flüssigkeit gezogen werden. So ist stets ein gleichmäßiger Kontakt von Flüssigkeit und erfindungsgemäßen Holzpartikeln gewährleistet.

## Patentansprüche

1. Verfahren zur Behandlung von Holzpartikeln für die Verwendung bei der Herstellung von alkoholischen Getränken umfassend folgende Schritte:
a) das Waschen der Holzpartikel mit Wasser unter Agitation bei mindestens 60°C; wobei die Holzpartikel optional bereits getoastet sein können;
b) das Entfernen des Wassers von den Holzpartikeln;
c) das thermische Trocknen der Holzpartikel;
d) das Toasten der Holzpartikel zum Erhalt von erfindungsgemäßen Holzpartikeln;
e) optional die Inkubation der erfindungsgemäßen Holzpartikel mit einer aromagebenden Flüssigkeit, gefolgt vom anschließenden Entfernen etwaiger überstehender aromagebenden Flüssigkeit und optional dem anschließenden Trocknen der erfindungsgemäßen Holzpartikel zum Erhalt von aromatisierten erfindungsgemäßen Holzpartikeln.

2. Verfahren zur Behandlung von Holzpartikeln nach Anspruch 1, wobei die Holzpartikel kleinteilig sind, bevorzugt mit einer Kantenlänge von ca. 2 mm und wobei die Holzpartikel jedwedige Form haben können, bevorzugt die Form von Holzchips oder Holzkubes.

3. Verfahren zur Behandlung von Holzpartikeln nach einem der vorangehenden Ansprüche wobei die Holzpartikel aus jedweder Art von Holz sein können, bevorzugt aus Eichenholz, besonders bevorzugt aus amerikanischem Eichenholz.

4. Verfahren zur Behandlung von Holzpartikeln nach einem der vorangehenden Ansprüche, wobei das Waschen der Holzpartikel mit Wasser unter Agitation bei mindestens 60°C erfolgt, bevorzugt bei mindestens 80°C, besonders bevorzugt bei mindestens 95°C.

5. Verfahren zur Behandlung von Holzpartikeln nach einem der vorangehenden Ansprüche, wobei das Waschen der Holzpartikel mit Wasser unter Agitation für mehr als 1 h erfolgt, bevorzugt für mehr als 5 h, besonders bevorzugt für mehr als 8 h.

6. Verfahren zur Behandlung von Holzpartikeln nach einem der vorangehenden Ansprüche, wobei für das Waschen der Holzpartikel mit Wasser unter Agitation mehr als 5 Liter Wasser je kg Holzpartikel verwendet werden soll, bevorzugt mehr als 10 Liter Wasser je kg Holzpartikel und besonders bevorzugt mehr als 12 Liter Wasser je kg Holzpartikel.

7. Verfahren zur Behandlung von Holzpartikeln nach einem der vorangehenden Ansprüche, wobei das Entfernen des Wassers von den Holzpartikeln mittels verschiedener Methoden erfolgen kann, bevorzugt durch Sieben oder Nutschen, besonders bevorzugt durch Schleudern.

8. Verfahren zur Behandlung von Holzpartikeln nach einem der vorangehenden Ansprüche, wobei das thermische Trocknen der Holzpartikel mittels verschiedener Methoden erfolgen kann, bevorzugt in einem Backofen, besonders bevorzugt in einem Backofen für ca. 15-30 Minuten bei ca. 180-200°C; wobei das Toasten der Holzpartikel mittels verschiedener Methoden erfolgen kann, bevorzugt in einem Backofen, besonders bevorzugt in einem Backofen für ca. 60 Minuten bei ca. 180-200°C.

9. Verfahren zur Behandlung von Holzpartikeln nach einem der vorangehenden Ansprüche wobei die optionale Inkubation der erfindungsgemäßen Holzpartikel mit einer aromagebenden Flüssigkeit nach verschiedenen Methoden erfolgen kann, bevorzugt durch Überschichten der erfindungsgemäßen Holzpartikel mit der aromagebenden Flüssigkeit; wobei die aromagebende Flüssigkeit Sherry, Portwein, Rum, Cognac, Gin, Wein, ein beliebiger Obstbrand oder eine andere Flüssigkeit mit erwünschtem Geschmacksbeitrag sein kann.

10. Verfahren zur Behandlung von Holzpartikeln nach einem der vorangehenden Ansprüche, wobei die optional inkubierten Holzpartikel mit aromagebender Flüssigkeit anschließend optional mittels verschiedener Methoden getrocknet werden können, bevorzugt durch Absieben von überschüssiger aromagebender Flüssigkeit oder thermisch in einem Backofen bei 90-130°C, bevorzugt bei 120°C.

11. Holzpartikel, behandelt nach dem erfindungsgemäßen Verfahren nach einem der vorangehenden Ansprüche für die Verwendung bei der Herstellung von alkoholischen Getränken, wobei die erfindungsgemäßen Holzpartikel optional aromatisiert sein können und wobei die Holzpartikel einmalig oder mehrfach zur Behandlung von alkoholischen Getränken verwendet werden können.

12. Verwendung der erfindungsgemäßen Holzpartikel nach einem der vorangehenden Ansprüche zur Herstellung von alkoholischen Getränken, umfassend folgende Schritte:
a) das Versehen eines alkoholischen Getränks mit erfindungsgemäßen Holzpartikeln, die optional aromatisiert sein können, wobei die Holzpartikel neu hergestellt oder bereits zur Getränkebehandlung verwendet worden sein können, und wobei optional das alkoholische Getränk bereits in einem Fass gelagert gewesen sein kann;
b) die Inkubation des alkoholischen Getränks mit den erfindungsgemäßen Holzpartikeln;
c) das Entfernen der erfindungsgemäßen Holzpartikel aus dem damit inkubierten alkoholischen Getränk;
d) optional die weitere Lagerung des inkubierten alkoholischen Getränks in einem Fass, bevorzugt in einem Eichenfass, besonders bevorzugt in einem Fass aus amerikanischer Eiche;
e) alternativ optional eine oder mehrere weitere Inkubationen des alkoholischen Getränks mit erfindungsgemäßen Holzpartikeln, wobei die erfindungsgemäßen Holzpartikel optional aromatisiert sein können und wobei die Holzpartikel neu hergestellt oder bereits zur Getränkebehandlung verwendet worden sein können.

13. Verwendung der erfindungsgemäßen Holzpartikel nach Anspruch 12, wobei das alkoholische Getränk mit mindestens 10 g je Liter erfindungsgemäßen Holzpartikel versehen wird, bevorzugt mit 10 g bis 70 g je Liter erfindungsgemäßen Holzpartikel.

14. Verwendung der erfindungsgemäßen Holzpartikel nach einem der Ansprüche 12 oder 13, wobei die Inkubation des alkoholischen Getränks mit den erfindungsgemäßen Holzpartikeln unter Agitation ca. 3 Stunden bis 3 Monate oder länger dauern kann, bevorzugt ca. 4 bis 24 Stunden, besonders bevorzugt ca. 6 bis 14 Stunden.

## Claims

1. A method for the treatment of wood particles for use in the production of alcoholic beverages, comprising the steps of:
a) washing the wood particles with water under agitation at a temperature of at least 60°C; wherein the wood particles may optionally already be toasted,
b) removing the water from the wood particles,
c) the thermal drying of the wood particles,
d) toasting the wood particles to obtain wood particles according to the invention,
e) optionally the incubation of the wood particles according to the invention with an aroma-bearing liquid, subsequent removal of any supernatant aroma-bearing liquid and optionally the subsequent drying of the wood particles according to the invention to obtain aromatised wood particles according to the invention.

2. A method for the treatment of wood particles according to claim 1, wherein the wood particles are small-scale, preferably with an edge length of about 2mm, and wherein the wood particles may have any shape, preferably the shape of wood chips or wood cubes.

3. A method for the treatment of wood particles according to any one of the preceding claims, wherein the wood particles may be of any kind of wood, preferably of oak, more preferably of American oak.

4. A method for the treatment of wood particles according to any one of the preceding claims, wherein the washing of the wood particles with water under agitation is carried out at a temperature of at least 60°C, preferably of at least 80°C, more preferably of at least 95°C.

5. A method for the treatment of wood particles according to any one of the preceding claims, wherein the washing of the wood particles with water under agitation is carried out for more than 1 hour, preferably for more than 5 hours, more preferably for more than 8 hours.

6. A method for the treatment of wood particles according to any one of the preceding claims, wherein for washing the wood particles with water under agitation, more than 5 liters of water per kg of wood particle is used, preferably more than 10 liters of water per kg of wood particles and more preferably more than 12 liters of water / kg of wood particles.

7. A method for the treatment of wood particles according to any one of the preceding claims, wherein the removal of the water from the wood particles can be done by various methods, preferably by sieving or by suction, more preferably, by spinning.

8. A method for the treatment of wood particles according to one of the preceding claims, wherein the thermal drying of the wood particles can be carried out by means of various methods, preferably in an oven, more preferably in an oven for about 15-30 minutes at about 180-200°C; wherein the toasting of the wood particles can be carried out by means of various methods, preferably in a baking oven, more preferably in a baking oven for about 60 minutes at about 180-200 ° C.

9. A method for the treatment of wood particles according to one of the preceding claims, wherein the optional incubation of the wood particles according to the invention with an aroma-bearing liquid can be carried out by various methods, preferably by overlaying the wood particles according to the invention with the aroma-bearing liquid;
wherein the aroma-bearing liquid may be sherry, port wine, rum, cognac, gin, wine, any fruit brandy or any other liquid with a desired aroma contribution.

10. A method for the treatment of wood particles according to any one of the preceding claims, wherein the optionally incubated wood particles with aroma-bearing liquid may then optionally be dried by means of various methods, preferably by sieving-off excess aroma-bearing liquid or thermally, in a baking oven at 90-130°C, preferably at 120°C.

11. Wood particles, treated by the method according to any one of the preceding claims for use in the production of alcoholic beverages, wherein the wood particles according to the invention may optionally be aromatised and wherein the wood particles may be used once or more than once for the treatment of alcoholic beverages.

12. Use of the wood particles according to the invention according to one of the preceding claims for the production of alcoholic beverages, comprising the following steps:
a) the provision of an alcoholic beverage with wood particles according to the invention, which may optionally be aromatised, wherein the wood particles may have been newly prepared or already used for alcoholic beverage treatment, and optionally wherein the alcoholic beverage may already have been stored in a barrel;
b) the incubation of the alcoholic beverage with the wood particles according to the invention;
c) removing the wood particles according to the invention from the alcoholic beverage incubated therewith;
d) optionally, the further storage of the incubated alcoholic beverage in a barrel, preferably, in an oak barrel, more preferably in a barrel of American oak;
e) alternatively optionally one or more further incubations of the alcoholic beverage with wood particles according to the invention, wherein the wood particles according to the invention may optionally be aromatised and wherein the wood particles may have been newly prepared or already used for beverage treatment.

13. Use of the wood particles according to the invention and according to claim 12, wherein the alcoholic beverage is provided with at least 10g per liter of wood particles according to the invention, preferably with 10g to 70g per liter of wood particles according to the invention.

14. Use of the wood particles according to the invention and according to one of the claims 12 or 13, wherein the incubation of the alcoholic beverage with the wood particles according to the invention under agitation may take about 3 hours to 3 months or longer, preferably, about 4 to 24 hours, more preferably, about 6 to 14 hours.

## Revendications

1. Procédé servant au traitement de particules de bois destinées à être utilisées dans la fabrication de boissons alcoolisées, comprenant les étapes consistant :
a) à laver les particules de bois avec de l'eau sous agitation à une température d'au moins 60 °C ; dans lequel les particules de bois peuvent éventuellement être déjà grillées ;
b) à retirer l'eau des particules de bois ;
c) à sécher thermiquement les particules de bois ;
d) à griller les particules de bois pour obtenir des particules de bois selon l'invention ;
e) éventuellement à incuber les particules de bois selon l'invention, avec un liquide porteur d'arôme, ultérieurement à retirer tout liquide porteur d'arôme surnageant et éventuellement, à sécher ultérieurement les particules de bois selon l'invention, pour obtenir des particules de bois aromatisées selon l'invention.

2. Procédé servant au traitement de particules de bois selon la revendication 1, dans lequel les particules de bois sont à petite échelle, préférentiellement avec une longueur d'arête d'environ 2 mm et dans lequel les particules de bois peuvent présenter une forme quelconque, préférentiellement la forme de copeaux de bois ou de cubes de bois.

3. Procédé servant au traitement de particules de bois selon l'une quelconque des revendications précédentes, dans lequel les particules de bois peuvent être de tout type de bois, préférentiellement du chêne, plus préférentiellement du chêne américain.

4. Procédé servant au traitement de particules de bois selon l'une quelconque des revendications précédentes, dans lequel le lavage des particules de bois avec de l'eau sous agitation est effectué à une température d'au moins 60 °C, préférentiellement à au moins 80 °C, plus préférentiellement à au moins 95 °C.

5. Procédé servant au traitement de particules de bois selon l'une quelconque des revendications précédentes, dans lequel le lavage des particules de bois avec de l'eau sous agitation est effectué pendant plus d'une heure, préférentiellement pendant plus de 5 heures, plus préférentiellement pendant plus de 8 heures.

6. Procédé servant au traitement de particules de bois selon l'une quelconque des revendications précédentes, dans lequel pour laver les particules de bois avec de l'eau sous agitation, on utilise plus de 5 litres d'eau par kg de particules de bois, préférentiellement plus de 10 litres d'eau par kg de particules de bois et plus préférentiellement plus de 12 litres d'eau par kg de particules de bois.

7. Procédé servant au traitement de particules de bois selon l'une quelconque des revendications précédentes, dans lequel le retrait de l'eau des particules de bois peut être fait au moyen de divers procédés, préférentiellement par tamisage ou par aspiration, plus préférentiellement par centrifugation.

8. Procédé servant au traitement de particules de bois selon l'une des revendications précédentes, dans lequel le séchage thermique des particules de bois peut être effectué au moyen de divers procédés, préférentiellement dans un four, plus préférentiellement dans un four pendant environ 15 à 30 minutes à environ 180 à 200 °C ; dans lequel le grillage des particules de bois peut être effectué au moyen de divers procédés, préférentiellement dans un four de cuisson, plus préférentiellement pendant environ 60 minutes à environ 180 à 200 °C.

9. Procédé servant au traitement de particules de bois selon l'une des revendications précédentes, dans lequel l'incubation facultative des particules de bois selon l'invention, avec un liquide porteur d'arôme peut être effectuée par divers procédés, préférentiellement en superposant les particules de bois selon l'invention, avec le liquide porteur d'arôme ;
dans lequel le liquide porteur d'arôme peut être le sherry, le vin de Porto, le rhum, le cognac, le gin, le vin, toute eau-de-vie de fruits ou autre liquide comportant une contribution d'arôme souhaitée.

10. Procédé servant au traitement de particules de bois selon l'une quelconque des revendications précédentes, dans lequel les particules de bois éventuellement incubées avec un liquide porteur d'arôme peuvent ensuite éventuellement être séchées par divers procédés, préférentiellement en tamisant l'excès de liquide porteur d'arôme ou thermiquement, dans un four de 90 à 130 °C, préférentiellement à 120 °C.

11. Particules de bois traitées par le procédé d'invention selon l'une quelconque des revendications précédentes destinées à être utilisées dans la fabrication de boissons alcoolisées, les particules de bois selon l'invention, pouvant éventuellement être aromatisées et les particules de bois pouvant être utilisées une ou plusieurs fois pour le traitement des boissons alcoolisées.

12. Utilisation des particules de bois selon l'invention, selon l'une des revendications précédentes destinée à la fabrication de boissons alcoolisées, comprenant les étapes consistant :
a) à fournir une boisson alcoolisée comportant des particules de bois selon l'invention, qui peuvent éventuellement être aromatisées, les particules de bois pouvant avoir été nouvellement préparées ou déjà utilisées pour le traitement de la boisson alcoolisée et la boisson alcoolisée pouvant avoir déjà été stockée dans un tonneau ;
b) à incuber la boisson alcoolisée avec les particules de bois selon l'invention ;
c) à retirer les particules de bois, selon l'invention, de la boisson alcoolisée qui y est incubée ;
d) éventuellement, le stockage ultérieur de la boisson alcoolisée incubée dans un fût, préférentiellement dans un fût de chêne, plus préférentiellement dans un fût de chêne américain ;
e) alternativement, éventuellement, une ou plusieurs autres incubations de la boisson alcoolisée avec des particules de bois selon l'invention, les particules de bois selon l'invention, pouvant éventuellement être aromatisées et dans lesquelles les particules de bois peuvent avoir été nouvellement produites ou déjà utilisées pour le traitement de boisson.

13. Utilisation des particules de bois selon l'invention et selon la revendication 12, dans lesquelles la boisson alcoolisée est pourvue d'au moins 10 g par litre de particules de bois selon l'invention, préférentiellement comportant de 10 g à 70 g par litre de particules de bois on l'invention.

14. Utilisation des particules de bois selon l'invention et selon l'une quelconque des revendications 12 ou 13, dans laquelle l'incubation de la boisson alcoolisée avec les particules de bois selon l'invention, sous agitation peut prendre environ 3 heures à 3 mois ou plus, préférentiellement environ 4 heures à 24 heures, plus préférentiellement environ 6 heures à 14 heures.
